# EUROPEAN PATENT APPLICATION

(11) **EP 0 533 194 A1**
(43) Date of publication of application: **24.03.1993**
(21) Application number: 92116020.6
(22) Date of filing: 18.09.1992
(51) Int. Cl.: H04N 5/10

(54) **Apparatus for detecting vertical synchronising signal**

(30) Priority: 20.09.1991 JP 270289/91
(71) Applicant: SONY CORPORATION, Tokyo (JP)
(72) Inventor: Koki, Tsumori, c/o SONY CORPORATION, Tokyo (JP)
(74) Representative: Melzer, Wolfgang, Dipl.-Ing.

(57) **Abstract**

A device for detecting vertical synchronization signals and removing interference from these signals, including a timer (7-1-1) that sends a pulse in synchronism with the signal for a set time to mask (exclude) interference in the signal, and a detection means (7-1-2) that can detect the original signal, start the timer (7-1-1) then detect the signal again only after a pulse from the timer (7-1-1) has ended.

## Description

### BACKGROUND

### 1. Field of the Invention

This invention relates to a detection apparatus for a television receiver. More particularly it relates to a detection apparatus for detecting the incoming original vertical synchronization signals.

### 2. Background of the Invention

In the conventional color television receiver, signals from the antenna are supplied through a tuner to a video processor and an audio processor. The video image is displayed on a cathode ray tube (CRT) and the audio signal is reproduced from a loudspeaker. The video processor and so on perform processes on the basis of the vertical synchronization signals (the period (one field) is usually 16.7 ms) within the signals. In the conventional color television receiver, however, an outside disturbance such as noise can easily enter the vertical synchronization signals at the time of a no signal condition or during channel selection. Thus, the period of the vertical synchronization signals is sometimes upset by this external disturbance causing the video processor and so on to malfunction.

The present invention addresses the problem with a detection apparatus of unique design. It has a timer which can send a pulse for a set period of time. It has a detection means that can detect the incoming vertical synchronization signal, start the timer in synchronism with this signal, detect when the timer pulse has ended and detect when the next signal arrives after the timer pulse has ended.

Thus, it is an object of the present invention to provide a detection apparatus which masks (excludes) external disturbances such as noise mixed into the vertical synchronization signals, and detect the original vertical synchronization signals.

### SUMMARY OF THE INVENTION

This and other objects are attained according to the invention by providing a detection apparatus which includes a timer for starting timer operation in synchronism with vertical synchronization signals and generating an output when a constant time has elapsed from the start of operation, and a detection portion for detecting the incoming vertical synchronization signals when the timer has generated an output after the detection of the preceding vertical synchronization signal and at this time, supplying an output to said timer.

Reduction of interference is effected by the timer starting timer operation in synchronism with the output from the detection portion and supplying the output to the detection portion when the constant time has elapsed from the start of operation. The timer starts timer operation in synchronism with the original vertical synchronization signals and generates an output to the detection portion when a constant time has elapsed from the start of operation. The detection portion detects the incoming vertical synchronization signals when the timer has generated an output after the detection of the preceding vertical synchronization signal, and at this time, supplies the output to the detection portion.

In the preferred embodiment, the timer is constructed to start timer operation in synchronism with the output from the detection portion, or in synchronism with the vertical synchronization signals, detected by the detection portion, and supplies the output to the detection portion when the constant time has elapsed from the start of operation. Thus, the external disturbance such as noise mixed into the vertical synchronization signals can be masked (excluded) and the original vertical synchronization signals can be detected.

Another aspect of the preferred embodiment is that it constitutes a method for processing a vertical synchronization signal in a television. The method includes the ordered steps of: detecting a first vertical synchronization pulse, upon receipt of this first pulse establishing a blanking time period during which time no vertical synchronization pulses can be detected and detecting a second vertical synchronization pulse after said blanking time period has expired.

The features of the invention believed to be novel are set forth with particularity in the appended claims. The invention itself, however, both as to construction and method of operation, together with further objects and advantage thereof, may be best understood by reference to the following description taken in conjunction with the accompanying drawings.

### BRIEF DESCRIPTION OF THE DRAWINGS

The invention may be better understood from the following detailed description, taken in conjunction with the accompanying drawings, in which:
- FIG. 1: is a block diagram of one embodiment of a color television receiver with a detection apparatus designed according to the invention;
- FIG. 2: is a flow chart of the operation of the microcomputer shown in FIG. 1;
- FIG. 3: is a timing chart for the operation of the arrangement of FIG. 1.

### DETAILED DESCRIPTION OF THE INVENTION

While this invention is susceptible of embodiment in many different forms, there is shown in the drawings and will herein be described in detail specific embodiments, with the understanding that the present disclosure is to be considered as an example of the principles of the invention and not intended to limit the invention to the embodiments illustrated.

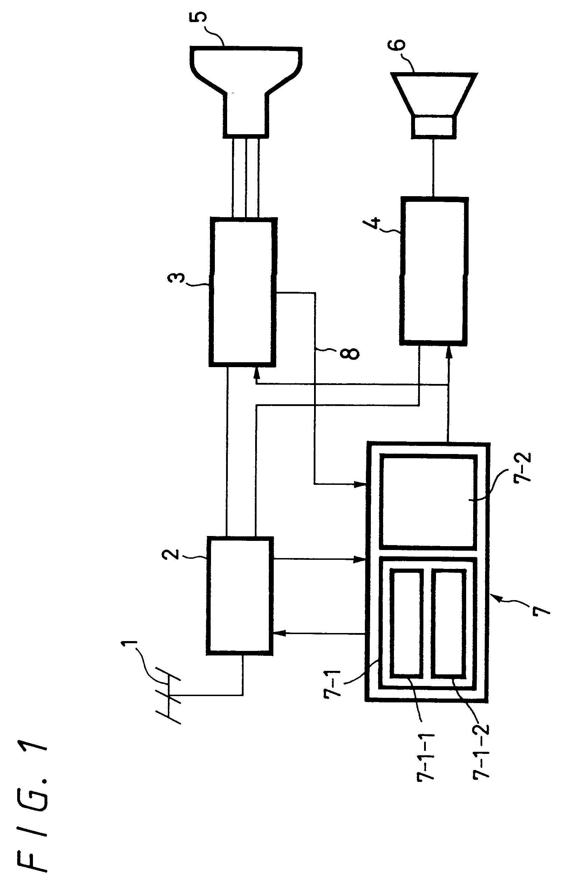

In the embodiment shown in Fig. 1, there is an antenna 1 for receiving radio waves from broadcasting stations. The signs received by the antenna 1 are supplied through a tuner 2 to a video processor (VP) 3 and to an audio processor (AP) 4. There is shown a cathode ray tube (CRT) 5 for displaying the video image from the video processor 3. There is also shown a loud speaker 6 for reproducing the output from the audio processor 4.

There is shown a microcomputer 7. The microcomputer 7 is supplied with vertical synchronization signals through a signal line 8 from the video processor 3. The microcomputer 7 includes: detection means 7-1 for masking (excluding) an external disturbance such as noise from the input vertical synchronization signals and detecting the original synchronization signals, and controller 7-2 for processing a sequence of processing steps in synchronism with the vertical synchronization signals when the detector 7-1 has detected the vertical synchronization signals. The detection means 7-1 includes: a timer 7-1-1 for starting timer operation in synchronism with the original vertical synchronization signals and, after lapse of a constant time, generating an output, and a detection portion 7-1-2 for detecting the incoming vertical synchronization signals, when the timer has generated an output, after the detection of the preceding vertical synchronization signal. At this time the detection portion 7-1-2 supplies an output to the timer.

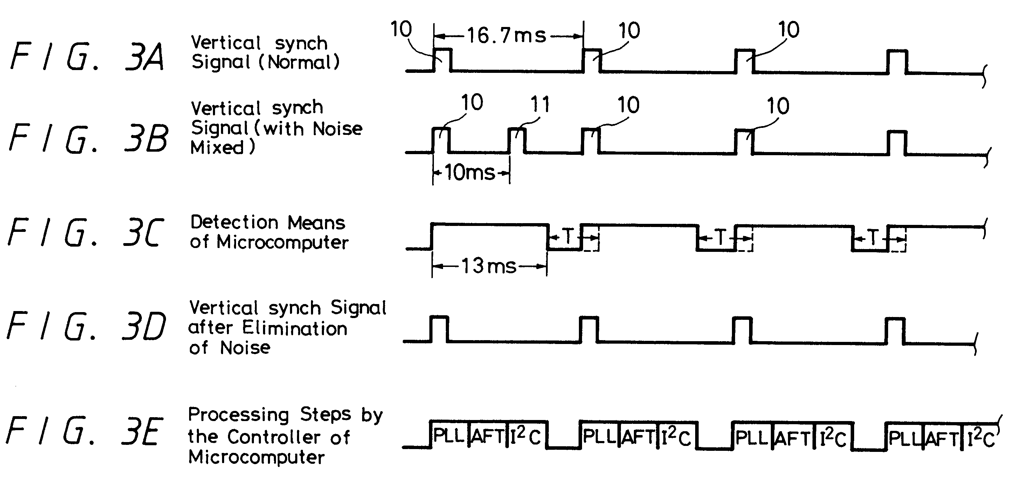

In the preferred embodiment, the sequence of processing steps which the controller 7-2 of the computer 7 performs includes: the control for the tuner 2 (the sending of data corresponding to a channel to the phase locked loop integrated circuit (PLL IC) of the tuner 2), the checking of AFT (Auto Frequency Tuning) of the tuner 2, and the control for ICs of video processor 3 and audio processor 4 (the sending of data to each IC of video processor 3 and audio processor 4 in accordance with the data transfer system of I2C format). When an external disturbance such as noise is not mixed into the vertical synchronization signals, the vertical synchronization signals fed from the video processor 3 through the signal line 8 are as shown in Fig. 3(A), in which 10 represents the original vertical synchronization signals. However, when an external disturbance 11 is mixed into the vertical synchronization signals, the noise-mixed vertical synchronization signals might appear as shown in Fig. 3(B).

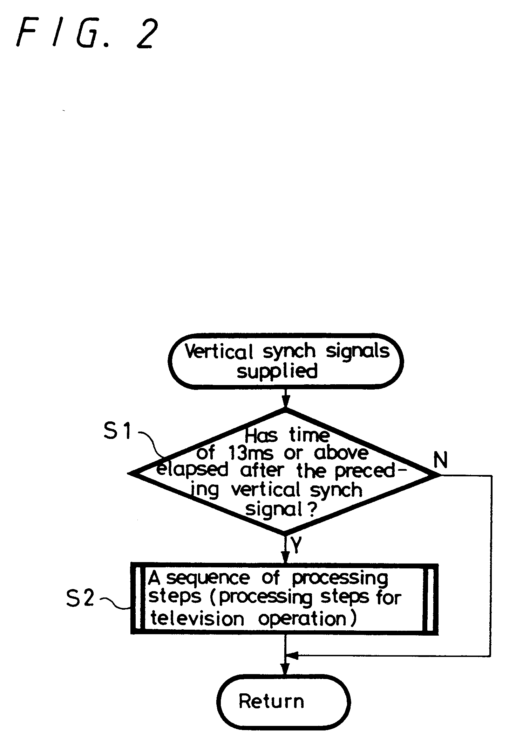

First, the video processor 3 supplies through the signal line 8 one of the original vertical synchronization signals 10, as shown in Fig. 3(B) to the microcomputer 7. In the microcomputer 7, the timer 7-1-1 of the detector 7-1 starts timer operation and continues timer operation for a constant time (here, 13 ms). After lapse of the constant time, it generates its output to the detection portion 7-1-2, in synchronism with the original vertical synchronization signals 10, as shown in Fig. 3(C). When the external disturbance (noise) 11, as shown in Fig. 3(B) as a vertical synchronization signal, is supplied from the video processor 3 to the microcomputer 7, the detection portion 7-1-2 decides that a constant time (13 ms) has elapsed (step S1 in Fig. 2). In this case, when the external disturbance (noise) 11 as shown in Fig. 3(B) is supplied to the microcomputer 7, the detection portion 7-1-2 is not yet supplied with the output from the timer 7-1-1 after the detection of the preceding vertical synchronization signal 10 since only 10 ms has elapsed from the preceding vertical synchronization signal. Thus, since the constant time (13 ms) has not yet elapsed after the detection portion 7-1-2 detects the preceding vertical synchronization signal 10, the detection portion neglects the external disturbance (noise) and does not detect the supply of the external disturbance (noise) 11 as a vertical synchronization signal. In other words, the external disturbance 11 is masked (excluded) (see Fig. 3(D)).

The microprocessor 7 then enters another processing. The detection portion 7-1-2, when supplied with the output from the timer 7-1-1, decides that the constant time (13 ms) has elapsed. Thus, when the original vertical synchronization signal 10, following the external disturbance 11, has been supplied to the microcomputer 7, the detection portion 7-1-2 decides that 10 ms has elapsed from the preceding vertical synchronization signal since it is already supplied with the output from the timer 7-1-1. Thus, the input vertical synchronization signal 10 is detected within the window period T shown in Fig. 3(C) (step S1 in Fig. 2).

When detecting the vertical synchronization signal 10, the detection portion 7-1-2 supplies its output to the timer 7-1-1 and to the controller 7-2. Similarly as described above, the timer 7-1-1 starts the timer operation in synchronism with the output from the detection portion 7-1-2, or in synchronism with the vertical synchronization signal 10 which the detection portion 7-1-2 has detected. After the constant time (13 ms) has elapsed, the timer supplies its output to the detection portion 7-1-2. The controller 7-2 performs a sequence of processing steps, as shown in Fig. 3(E), in synchronism with the output from the detection portion 7-1-2, or in synchronism with the vertical synchronization signal 10 detected by the detection portion 7-1-2 (step S2 in Fig. 2). In other words, the controller 7-2 handles the control for the tuner 2 (supplies data according to a channel to the PLL IC of the tuner 2), the checking of AFT (Auto Frequency Tuning) of the tuner 2, and the control for ICs of the video processor 3 and audio processor 4 (supplies data to ICs of the video processor 3 and audio processor 4 in accordance with the data transfer system of I2C format). The above operations are repeated. The external disturbance 11 which becomes mixed into the vertical synchronization signal supplied to the microcomputer 7 is excluded by the detector 7-1 and thus the vertical synchronization signals become as shown in Fig. 3(D). In Fig. 3(C), the window period T is provided for adjusting the error on the time base of the vertical synchronization signals.

As will be understood from the above description, when the external disturbance 11 such as noise mixed in the vertical synchronization signals as shown in Fig. 3(B) is supplied as a vertical synchronization signal to the microcomputer 7, the detector 7-1 neglects (excludes) the external disturbance 11. Thus it does not detect the external disturbance 11 as a vertical synchronization signal since it occurs before the constant time (13 ms) from the preceding original vertical synchronization signal 10. Since the controller 7-2 performs a sequence of processing steps in synchronism with the original vertical synchronization signals, the tuner 2, the video processor 3 and the audio processor 4 can be prevented from malfunctioning.

According to this invention mentioned above, the detection portion detects only the incoming vertical synchronization signal occurring after a constant time from the preceding vertical synchronization signal. In other words, it masks (excludes) the external disturbance, such as noise mixed in the vertical synchronization signals, when the constant time has not elapse yet from the occurrence of the preceding vertical synchronization signal. Thus it can detect the original vertical synchronization signals, rather than the external disturbance.

Although the invention has been described and illustrated herein by reference to specific embodiments thereof, it will be understood that such embodiments are susceptible to variation and modification without departing from the inventive concepts disclosed. All such variations and modifications, thereof, are intended to be included within the spirit and scope of the appended claims.

## Claims

1. A detection apparatus comprising:
a timer (7-1-1) for starting timer operation in synchronism with vertical synchronization signals and generating an output when a constant time has elapsed; and, a detection portion (7-1-2) for detecting said incoming vertical synchronization signals occuring when said timer (7-1-1) has generated said output after the detection of the preceding vertical synchronization signal, and at this time, supplying an output to said timer (7-1-1), said timer (7-1-1) being constructed to start timer operation in synchronism with said output from said detection portion (7-1-2) and to generate said output to said detection portion when said constant time has elapsed from the start of operation.

2. In a device that receives television signals, a detection apparatus comprising: timer means (7-1-1) for masking noise in a vertical synchronization signal by sending a pulse for a set period of time; and, detection means (7-1-2) for detecting said vertical synchronization signal during a time period after said set period of time.

3. A detection apparatus as in claim 2, wherein said detection means (7-1-2) starts said timer means in synchronism with said vertical synchronization signal.

4. A detection apparatus as in claim 2 or 3, wherein said detection means (7-1-2) detects the end of said pulse sent from said timer means (7-1-1).

5. A detection apparatus as in any one of claims 2 to 4, wherein said detection means (7-1-2) detects said vertical synchronization signal after detecting said pulse from said timer (7-1-1).

6. A detection apparatus as in any one of claims 2 to 5, further comprising control means (7-2) for performing a sequence of processing steps in synchronism with said vertical synchronization signals after said detection means (7-1-2) has detected said vertical synchronization signals.

7. A method for detecting vertical synchronization signals, comprising the ordered steps of:
a. detecting said vertical synchronization signal;
b. starting a timer (7-1-1) that sends a pulse for a set period of time in synchronism with said vertical synchronization signal;
c. detecting when said pulse from said timer (7-1-1) has ended;
d. detecting next said synchronization signal only after said pulse from said timer has ended; and,
e. repaeating steps b through e inclusive.

8. In a color television receiver including an antenna (1) for receiving radio waves from broadcasting stations, a cathode ray tube (CRT) (5) for displaying video images, a loudspeaker (6) for reproducing the output from an audio processor (4), a tuner (2) for receiving said radio waves from said antenna (1) and supplying said radio waves to a video processor (3) and to said audio processor (4), an apparatus comprising:
microcomputer (7) comprising:
a signal line (8) from said video processor (3);
a detection apparatus (7-1), comprising:
timer means (7-1-1) for masking noise in said vertical synchronization signal by sending a pulse for a set period of time;
detection means (7-1-2) that detects said vertical synchronization signal for starting said timer (7-1-1) means;
detection means for detecting the end of said pulse sent from said timer means (7-1-1); and, detection means for detecting said vertical synchronization signal after detecting said pulse from said timer (7-1-1); and control means (7-2) for performing a sequence of processing steps in synchronism with said vertical synchronization signals after said detection means (7-1-2) has detected said vertical synchronization signals; and, a video processor (3) to accept signals from said tuner (2), to send vertical synchronization signals to said microcomputer (7), and to send video images to said CRT.

9. In a television receiver, a method for processing a vertical synchronization signal, comprising the steps of:
detecting a first vertical synchronization pulse; upon receipt of said first vertical synchronization pulse, establishing a blanking time period during which time no vertical synchronization pulses can be detected; and detecting a second vertical synchronization pulse after said blanking time period has expired.

10. The method of claim 9, wherein said blanking time period in less than approximately 16.7 milliseconds.

11. The method of claim 9, wherein said blanking time period is approximately 13 milliseconds.

12. The method of any one of claims 9 to 11, wherein said step of estalishing a blanking time period includes starting a timer (7-1-1) upon receipt of said first vertical synchronization pulse.

13. The method of claim 12, wherein said timer (7-1-1) includes a microcomputer timer.

14. The method of claim 12 or 13, wherein said timer (7-1-1) produces a pulse having a duration of said blanking time period.

15. The method of any one of claims 9 to 14 wherein further including the step of detecting said second vertical synchronization pulse.

16. The method of any one of claims 9 to 15, wherein said vertical synchronization signal includes a plurality of vertical synchronization pulses and further including repeating said detecting steps and said establishing steps for each said vertical synchronization pulse.
